# EUROPEAN PATENT SPECIFICATION

(11) **EP 4 570 494 B1**
(45) Date of publication and mention of the grant of the patent: **02.12.2026**
(21) Application number: 25165105.5
(22) Date of filing: 30.10.2019
(51) Int. Cl.: G02F 1/153, B32B 17/10, G02F 1/161

(54) **ELECTROCHROMIC FILMS WITH EDGE PROTECTION**
ELEKTROCHROME FILME MIT KANTENSCHUTZ
FILMS ÉLECTROCHROMIQUES À PROTECTION DE BORD

(30) Priority: 14.11.2018 US 201816190723
(43) Date of publication of application: 18.06.2025
(62) Document number(s) of the earlier application(s) in accordance with Art. 76 EPC: 23164353.7 / 4 220 293; 19206363.4 / 3 654 095
(73) Proprietor: Furcifer Inc., Fremont, CA 94538 (US)
(72) Inventor: CHEN, Zhao, Fremont, 94538 (US); WANG, Jian, Fremont, 94538 (US); ZHOU, Yan, Fremont, 94538 (US)
(74) Representative: Marks & Clerk LLP

(56) References cited:
- WO-A1-2010/032068
- US-A1- 2004 067 343
- US-A1- 2013 010 347
- US-A1- 2016 282 645
- US-A1- 2017 298 682
- US-A1- 2017 299 932

## Description

### FIELD OF THE INVENTION

The invention generally relates to electrochromic devices, and in particular, to electrochromic devices with edge protection and methods for making the same.

### BACKGROUND

Electrochromism generally refers to a reversible change in optical properties of a material upon application of a potential. In particular, electrochromic materials exhibit a reversible color change due to an electrochemical reduction-oxidation (redox) reaction caused by application of an electric field.

Electrochromic materials are useful for a variety of applications, including photovoltaic devices, field effect transistors, organic light emitting diodes, general printed electronics, anti-glare windows, display systems, etc.

Usually, electrochromic materials are sandwiched between rigid substrates to make devices. The electrochromic films based on flexible substrates have advantages over the traditional electrochromic glasses in terms of weight, ease of transportation, ability to apply on curved surface, etc.

For applications involving smart window technology, the electrochromic materials need to be integrated with a glass substrate (e.g., a glass window) to be serviceable. The integration process usually requires that the electrochromic film be sandwiched between two glass panels with interlayers such as polyvinyl butyral (PVB) and SentryGlas etc. Then, those packages would be pressed and heated at certain pressure and temperature. After the lamination process, the interlayers will be cured and will fix the electrochromic film between glass panels. There are certain additives within the interlayers for the purpose of chemical and physical property modifications. Those additives can infiltrate into the multilayer electrochromic films and adversely affect the electrochromic films. As a result, the performance and lifetime of electrochromic films can be severely compromised.

Therefore, there is a need for an improved design of electrochromic films to address the above and other problems.

US 2016/282645 A1 discloses a laminated glazing with improved moisture protection.

US 2013/010347 A1 discloses an all-solid reflective dimming electrochromic element sealed with protective layer.

US 2017/299932 A1 discloses a solid polymer electrolyte, including a polymer framework, at least one solid plasticizer, and at least one electrolyte salt.

US 2017/298682 A1 relates to a method for integrating electrochromic films onto a substrate.

WO 2010/032068 A1 discloses an edge sealed switchable film assembly.

US 2004/067343 A1 discloses a laminated glazing, the glazing being provided with a first peripheral sealing means.

### SUMMARY

Aspects of the present invention provide for an electrochromic device as set out by the appended set of claims.

### BRIEF DESCRIPTION OF THE DRAWINGS

Preferred and non-limiting embodiments of the invention may be more readily understood by referring to the accompanying drawings in which:
FIG. **1** is a simplified schematic of a laminated structure having an electrochromic film disposed therein, according to one exemplary embodiment.
FIG. **2** is a simplified schematic of an electrochromic film, according to one exemplary embodiment.
FIG. **3** is a perspective view of an electrochromic film, according one exemplary embodiment.
FIGs. **4A-4C** illustrate a method of preparing an electrochromic film with edge protection.
FIGs. **5** illustrates a flowchart of a method for preparing an electrochromic device.
FIG. **6** illustrate an electrochromic film with edge protection.
FIG. **7** illustrates a laminated electrochromic film with edge protection according to one exemplary embodiment.
FIG. **8** illustrates an unlaminated electrochromic film with edge protection.
FIG. **9** illustrates another laminated electrochromic film with edge protection.
FIG. **10A** illustrates performance and lifetime comparison of a laminated electrochromic film with edge protection according to an embodiment and one without edge protection.
FIG. **10B** illustrates performance and lifetime comparison of an unlaminated electrochromic film with edge protection according to an embodiment and one without edge protection.

### DETAILED DESCRIPTION OF THE PREFERRED EMBODIMENTS

In the following description, certain specific details are set forth in order to provide a thorough understanding of various embodiments of the invention. However, one skilled in the art will understand that the invention may be practiced without these details. Moreover, while various embodiments of the invention are disclosed herein, many adaptations and modifications may be made within the scope of the invention in accordance with the common general knowledge of those skilled in this art. Such modifications include the substitution of known equivalents for any aspect of the invention in order to achieve the same result in substantially the same way.

Unless the context requires otherwise, throughout the present specification and claims, the word "comprise" and variations thereof, such as, "comprises" and "comprising" are to be construed in an open, inclusive sense, that is as "including, but not limited to." Recitation of numeric ranges of values throughout the specification is intended to serve as a shorthand notation of referring individually to each separate value falling within the range inclusive of the values defining the range, and each separate value is incorporated in the specification as it were individually recited herein. Additionally, the singular forms "a," "an" and "the" include plural referents unless the context clearly dictates otherwise.

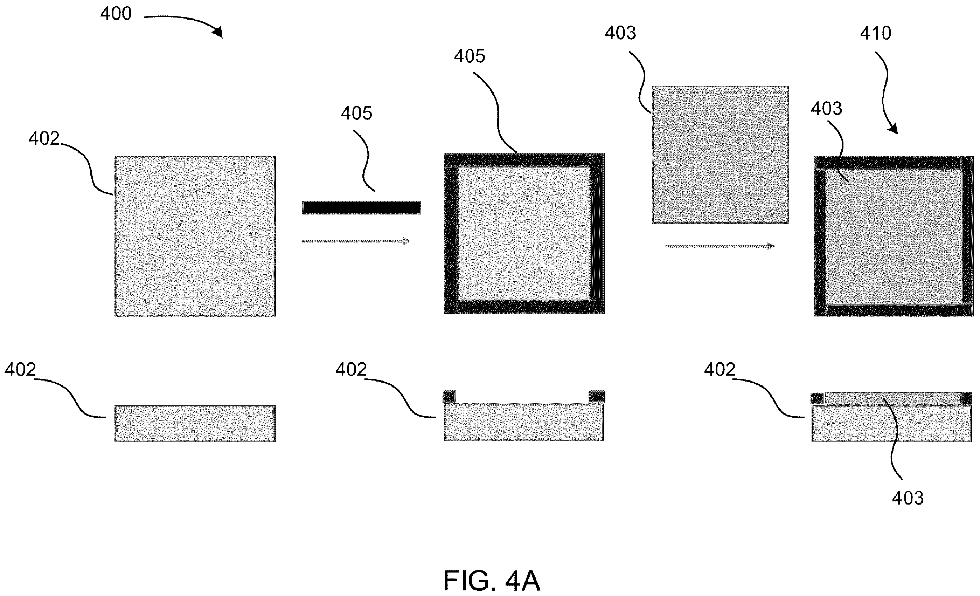

Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment, but may be in some instances. Furthermore, the particular features, structures, or characteristics may be combined in any suitable manner in one or more embodiments. The examples shown in Figures 4A-4C, 5, 6, 8, and 9 are not encompassed by the literal wording of the claims but are considered as useful for understanding the invention.

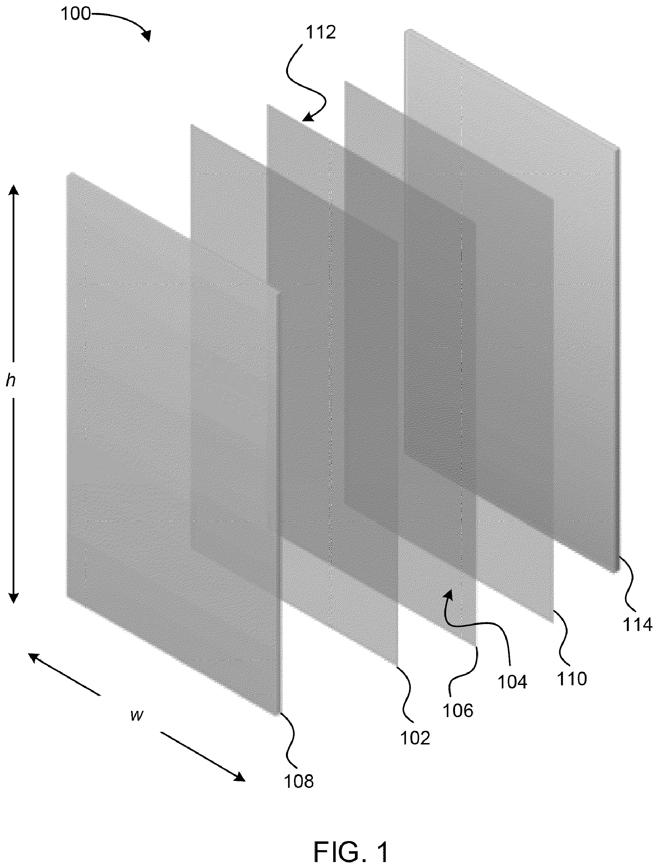

A simplified schematic of a laminated structure with an electrochromic film interposed therein is shown in FIG. **1****,** according to one exemplary embodiment. For clarity purposes only, the various components of the laminated structure (e.g., substrates, adhesive layers, and electrochromic film) are shown spaced apart.

As shown in FIG. **1****,** the laminated structure **100** includes a first adhesive interlayer **102** interposed between a first surface **104** of an electrochromic film **106** and a first substrate **108.** The laminated structure **100** also includes a second adhesive interlayer **110** interposed between a second surface **112** of the electrochromic film **106** and a second substrate **114.** As seen in the embodiment of FIG. **1****,** the first and second surfaces **104, 112** correspond to opposing surfaces of the electrochromic film **106.**

The first and/or second adhesive interlayers **102, 110** may include a material (e.g., a thermosetting polymer material) configured to securely bond (e.g., cross-link) the electrochromic film **106** with the first and second substrates **108, 114.** As such, the first and/or second adhesive interlayers **102, 110** are configured to keep the laminated structure **100** together even when shattered/broken, and prevent the laminated structure **100** from breaking up into large, sharp pieces.

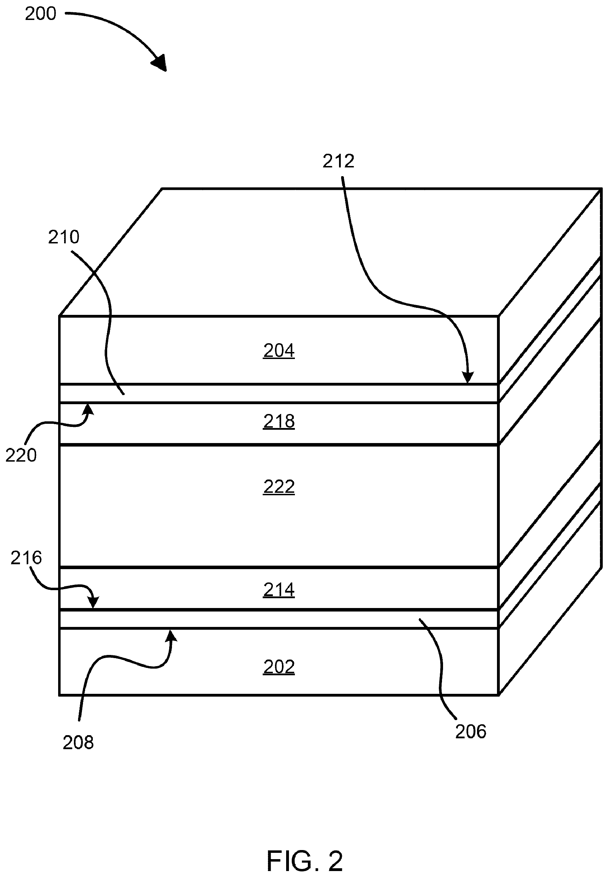

An exemplary, non-limiting schematic of an electrochromic film **200** is shown in FIG. **2****,** according to one embodiment. It is important to note that the electrochromic film **200** of FIG. **2** may be implemented in combination with other devices/features/components described herein, such as those described with reference to other embodiments/aspects. The electrochromic film **200** may be used in various applications and/or in permutations, which may or may not be noted in the illustrative embodiments/aspects described herein. For instance, the electrochromic film **200** may include more or less features/components than those shown in FIG. 2, in some embodiments. Additionally, unless otherwise specified, one or more components of the electrochromic film **200** may be of conventional material, design, and/or fabricated using known techniques (e.g., sputtering, chemical vapor deposition (CVD), physical vapor deposition (PVD), plasma-enhanced chemical vapor deposition (PECVD), spray coating, slot-die coating, dip coating, spin coating, printing, etc.), as would be appreciated by skilled artisans upon reading the present disclosure.

As shown in FIG. **2****,** the electrochromic film **200** includes a first transparent substrate **202** and a second transparent substrate **204** in spaced, parallel relation with each other. The first and second substrates **202, 204** may have the same or different dimensions, comprise the same or different materials, etc. Suitable materials for the first substrate **202** and/or the second substrate **204** may include, but are not limited to, glass, polymeric materials, plastic materials, and/or other materials which are transparent in at least part of the visible region of the electromagnetic spectrum. In some embodiments, the first and second substrates **202, 204** may comprise glass.

As also shown in FIG. **2****,** a first transparent electrically conductive film **206** is deposited on the interior surface **208** of the first substrate **202** to act as an electrode. A second transparent electrically conductive film **210** is also deposited on the interior surface **212** of the second substrate **204** to act as an electrode. The first and second electrically conductive films **206, 210** may have the same or different dimensions, comprise the same or different material, etc. The first and second electrically conductive films **206, 210** may also each independently have a single layer or multilayer structure. Suitable materials for the first and second electrically conductive films **206, 210** may include, but are not limited to, tin doped indium oxide (ITO), fluorine doped indium oxide, antimony doped indium oxide, zinc doped indium oxide, aluminum doped zinc oxide, silver nanowires, metal mesh, combinations thereof, and/or other such transparent material exhibiting sufficient electrical conductance. In preferred aspects, the first and second electrically conductive films **206, 210** may each include an electrode layer including tin doped indium oxide (ITO).

The electrochromic device **200** may additionally include an electrical power supply (not shown) configured to supply voltage between the first and second electrically conductive films **206, 210.**

As further shown in FIG. **2****,** a layer **214** of electrochromic material is deposited on the interior surface **216** of the first electrically conductive film **206.** The layer **214** of electrochromic material is configured to cause a reversible color change upon reduction (gain of electrons) or oxidation (loss of electron) introduced by an applied electrical current. In some embodiments, the layer **214** of electrochromic material may be configured to change from a transparent state to a colored state, or from a colored state to another colored state, upon oxidation or reduction. In some embodiments, the layer **214** of electrochromic material may be a polyelectrochromic material in which more than two redox states are possible, and may thus exhibit several colors.

In some embodiments, the layer **214** of electrochromic material may comprise an organic electrochromic material, an inorganic electrochromic material, a mixture of both, etc. The layer **214** of electrochromic material may also be a reduction colored material (i.e., a material that becomes colored upon acquisition of electrons), or an oxidation colored material (i.e., a material that becomes colored upon the loss of electrons).

In some embodiments, the layer **214** of electrochromic material may include a metal oxide such as MoO₃, V₂O₅, Nb₂O₅, WO₃, TiO₂, Ir(OH)ₓ, SrTiO₃, ZrO₂, La₂O₃, CaTiO₃, sodium titanate, potassium niobate, combinations thereof, etc. In some embodiments, the layer **214** of electrochromic material may include a conductive polymer such as poly-3,4-ethylenedioxy thiophene (PEDOT), poly-2,2'-bithiophene, polypyrrole, polyaniline (PANI), polythiopene, polyisothianaphthene, poly(o-aminophenol), polypyridine, polyindole, polycarbazole, polyquinone, octacyanophthalocyanine, combinations thereof, etc. Moreover, in some embodiments, the layer **214** of electrochromic material may include materials, such as viologen, anthraquinone, phenocyazine, combinations thereof, etc. Additional examples of electrochromic materials, particularly those including multicolored electrochromic polymers, may be found in U.S. Patent Application No. 15/399,839, filed Jan 6, 2017, the entirety of which is herein incorporated by reference.

As additionally shown in FIG. **2****,** a charge storage layer **218** is deposited on the interior surface **220** of the second electrically conductive film **210.** Suitable materials for the charge storage layer **218** may include, but are not limited to, vanadium oxide, binary oxides (e.g., CoO, IrO₂, MnO, NiO, and PrOₓ), ternary oxides (e.g., CeₓV_{y}O_{z}), etc.

In some embodiments, the charge storage layer **218** may be replaced with an optional second layer of electrochromic material. This optional second layer of electrochromic material may have the same or different dimensions, comprise the same or different composition, etc., as the first layer **214** of electrochromic material.

The electrochromic device **200** also includes an electrolyte layer **222** positioned between the layer **214** of electrochromic material and the charge storage layer **218.** In some embodiments, the electrolyte layer **222** may include a liquid electrolyte as known in the art. In some embodiments, the electrolyte layer **222** may include a solid state electrolyte, including but not limited to, Ta₂O₅, MgF, Li₃N, LiPO₄, LiBO₂-Li₂SO₄, etc. In some embodiments, the electrolyte layer **222** may include a polymer based electrolyte comprising an electrolyte salt (e.g., LiTFSI, LiPF₆, LiBF₄, LiClO₄, LiCF₃SO₃, LiN(CF₃SO₂)₂, LiSbFg, LiAsF₆, LiN(CF₃CF₂SO₂)₂, (C₂H₅)₄NBF₄, (C₂H₅)₃CH₃NBF₄, LiI, etc.), a polymer matrix (e.g., polyethylene oxide, poly(vinylidene fluoride( PVDF), poly(methyl methacrylate) (PMMA), polyethylene oxide (PEO), poly(acrylonitrile) (PAN), polyvinyl nitrile, etc.), and one or more optional plasticizers (e.g., glutaronitrile, succinonitrile, adiponitrile, fumaronitrile, etc.). Additional examples of electrolyte materials, particularly those including solid polymer electrolytes, may be found in U.S. Patent Applications No. 15/399,852, filed Jan 6, 2017 and No. 15/487,325, filed April 13, 2017, the entirety of which is herein incorporated by reference.

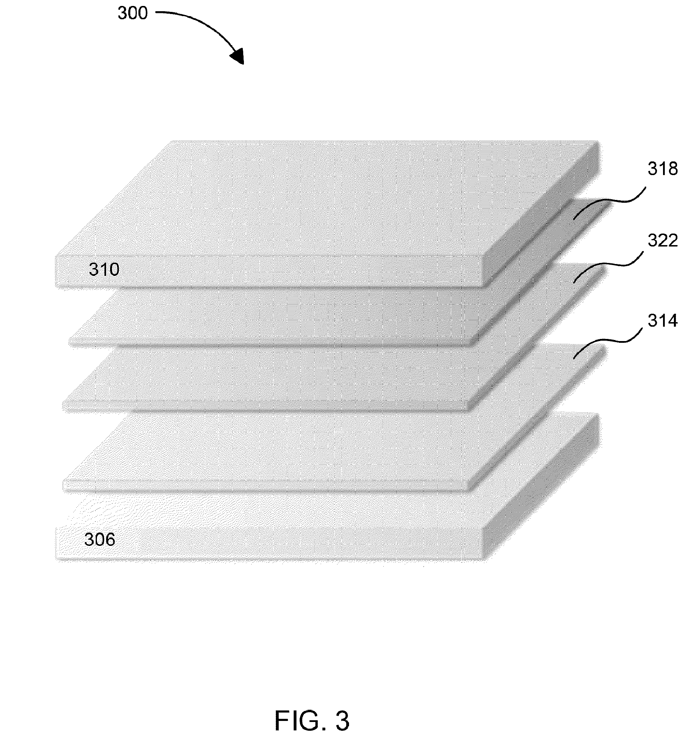

FIG. **3** is a perspective view of an electrochromic film **300,** according one exemplary embodiment. The difference between FIG. **2** and FIG. **3** is that in FIG. **3** only the electrochromic film **300** is shown in a perspective view, without the first transparent substrate **202** and the second transparent substrate **204** from FIG. **2****.** Similar to FIG. **2****,** the electrochromic film **300** includes a first transparent electrically conductive film **306** and a second transparent electrically conductive film **310.** Between the first transparent electrically conductive film **306** and the second transparent electrically conductive film **310,** the electrochromic film **300** further includes an electrolyte layer **322** positioned between an electrochromic material layer **314** and a charge storage layer **318.** In some embodiments, the polymer electrolyte layer **322** is a solid polymer electrolyte and the solid polymer electrolyte includes an electrolyte salt and a polymer matrix as discussed above with respect to the embodiment in FIG. **2****.**

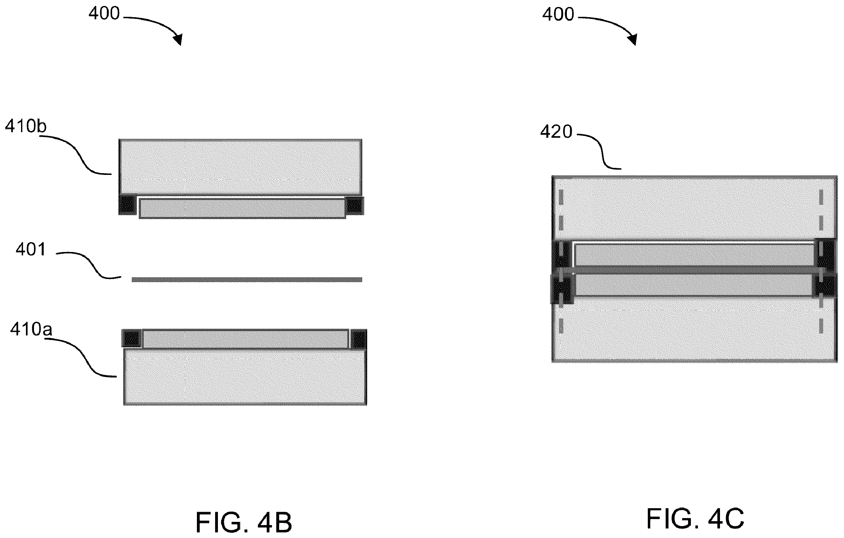

FIGs. **4A-4C** illustrate a method **400** of preparing a laminated electrochromic device with edge protection. FIG. **4A** illustrates a process of making a glass panel with edge protection for laminating with an electrochromic film. In FIG. **4A****,** a glass panel **402** is first prepared. Then four stripes of edge seal **405** made of an edge protection material are positioned on each of the four edges and on top of the glass panel **402.** The edge protection material may be selected from polyvinyl siloxane (PVS), Sentryglas, thermoplastic polyurethane (TPU), ethylene-vinyl acetate (EVA), etc. Next an interlayer **403** is placed on the center of the glass panel **402,** within the area confined by the four stripes of edge seal **405** to form a first interlayer-substrate portion **410.** The interlayer **403** may be made of polyvinyl butyral (PVB), UV Extraprotect PVB, or the like. As mentioned, the interlayer may contain undesired chemicals that may adversely affect the performance and lifetime of the electrochromic film. Usually, those chemicals may infiltrate the electrochromic film through the joint of the films, often via the electrolyte layer. With the edge protection, the interlayer **403**'s edges are sealed and the chemicals will not be able to enter into the electrochromic film. The same process can be used to form another interlayer-substrate. As shown in FIG. **4B****,** two interlayer-substrate portions **410a, 410b** are formed, each having an interlayer surrounded by edge protection materials. An electrochromic film **401** is positioned and laminated between the two interlayer-substrate portions **410a, 410b.** The electrochromic film **401** can be made as described above with reference to FIGs. **1-3****.** In FIG. **4C****,** an electrochromic film **420** with edge protection laminated within two glass panels are shown. The interlayers can be cured by pressing glass panels and heating the electrochromic device.

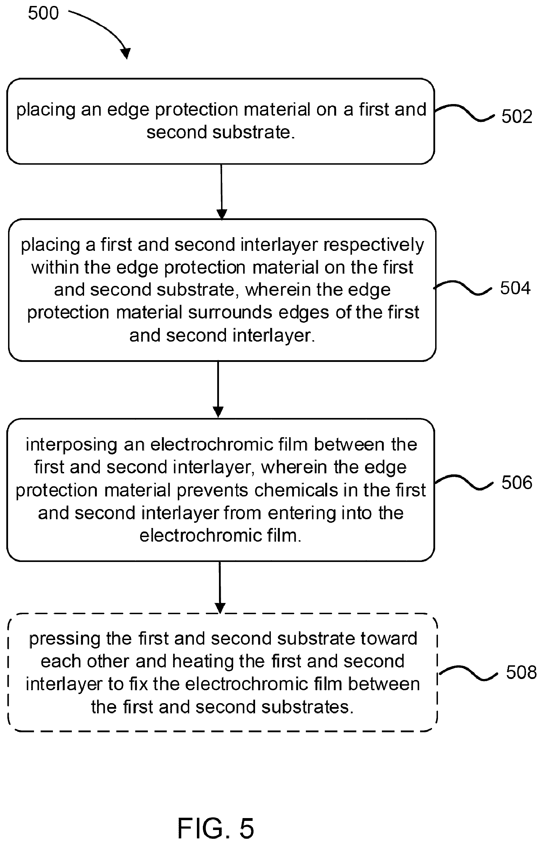

FIG. **5** illustrates a flowchart **500** summarizing the steps shown in FIGS. **4A-****4C.** In step **502,** an edge protection material is placed on a first and second substrates. In step **504,** placing a first and second interlayers respectively within the edge protection material on the first and second substrates, wherein the edge protection material surrounds edges of the first and second interlayers. In step **506,** interposing an electrochromic film between the first and second interlayers. The edge protection material may prevent chemicals in the first and second interlayers from entering into the electrochromic film. The method **500** may also include an optional step **508** of pressing the first and second substrates toward each other and heating the first and second interlayers to fix the electrochromic film between the first and second substrates.

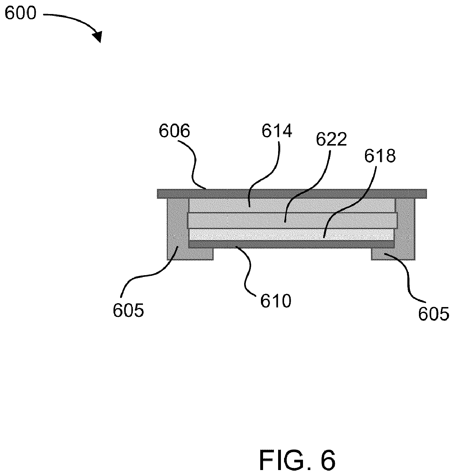

FIG. **6** is a sectional view **600** of the two electrochromic films **606** and **610** where their joint and edges are covered by an edge projection material, e.g., a layer of epoxy **605.** In FIG. **6****,** the two electrochromic films **606** and **610** are sandwiched with an electrochromic material layer **614,** an electrolyte layer **622,** and a charge storage layer **618.** After curing with heat or ultraviolet light, the epoxy **605** can work as an effective oxygen and moisture blocker. Using this method, an electrochromic film roll can be stored in an ambient environment for much longer time without sacrificing performance and lifetime. The epoxy can also be replaced by other suitable materials. In some embodiments, at least edges of one of the first electrode and second electrode, the electrochromic material, the solid polymer electrolyte, and the charge storage layer are covered by the edge protection material.

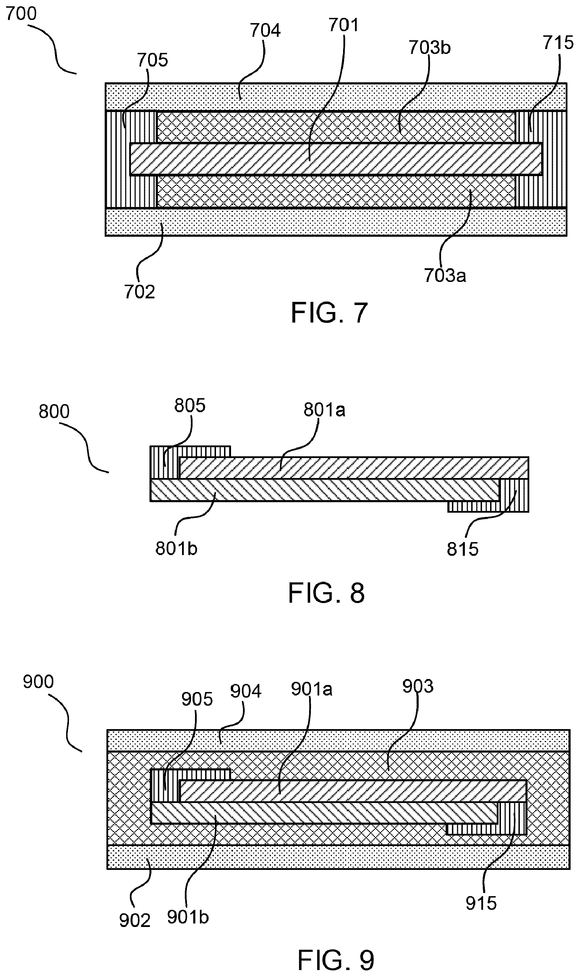

FIG. 7 illustrates a laminated electrochromic device **700** with edge protection according to one exemplary embodiment which is according to the claimed invention. The laminated electrochromic device **700** includes a first substrate **702** (e.g., a glass panel) at the bottom, a second substrate **704** (e.g., a glass panel) at the top, a first interlayer **703a** positioned above the first substrate **702,** a second interlayer **703b** positioned below the second substrate **704,** an electrochromic film **701,** and edge protection materials **705, 715** between the first substrate **702** and the second substrate **704** and around the interlayers **703a** and **703b** and the electrochromic film **701.** The edge protection materials **705, 715** are compatible with the electrochromic film **701** and the substrates but resistant to the chemicals of the interlayers **703a** and **703b.** The electrochromic film **701** is prepositioned so that its edges fit the edge protection materials **705, 715.** Followed by normal laminating process such as autoclave, the electrochromic film **701**'s edges will be protected by the edge protection materials **705, 715.**

FIG. **8** illustrates an electrochromic film **800** with edge protection. The electrochromic film in FIG. **8** includes two sides **801a** and **801b,** one as an anode and the other as a cathode. The upper side **801a** is covered by an edge protection material on the left side and the lower side **801b** is covered by an edge protection material on the left side. The electrochromic film **800** with edges covered can be rolled and easily stored in an ambient environment for much longer time without sacrificing performance and lifetime.

FIG. **9** illustrates another electrochromic device **900** with edge protection. Similar to FIG.**8****,** the electrochromic film in FIG. **9** includes two sides **901a** and **901b,** one as an anode and the other as a cathode. The edges of the electrochromic film **901a** and **901b** are covered by an edge protection material, e.g., a layer of epoxy **905** and **915.** After curing with heat or ultraviolet light, the epoxy **905** and **915** can work as an effective oxygen and moisture blocker. Then, the electrochromic film can be laminated between two substrates (e.g., glass panels) with a lamination process as described above. Similar to FIG. **7****,** the laminated electrochromic device 900 includes a first substrate **902** (e.g., a glass panel), a second substrate **904** (e.g., a glass panel), an interlayer **903** between the first substrate **902** and the second substrate **904,** and the electrochromic film with edge protection laminated within the interlayer **903.**

In some embodiments, the edge protection material, e.g., the epoxy **805/815/905/915,** may be electrically conductive so that it can function as the electrodes in the above-described embodiments. By using an electrically conductive material as the edge protection material, the electrochromic film fabrication process can save one step with respect to fabricating the electrodes. Alternatively, the electrically conductive edge protection material can conduct current to the electrode layer and/or charge storage layer.

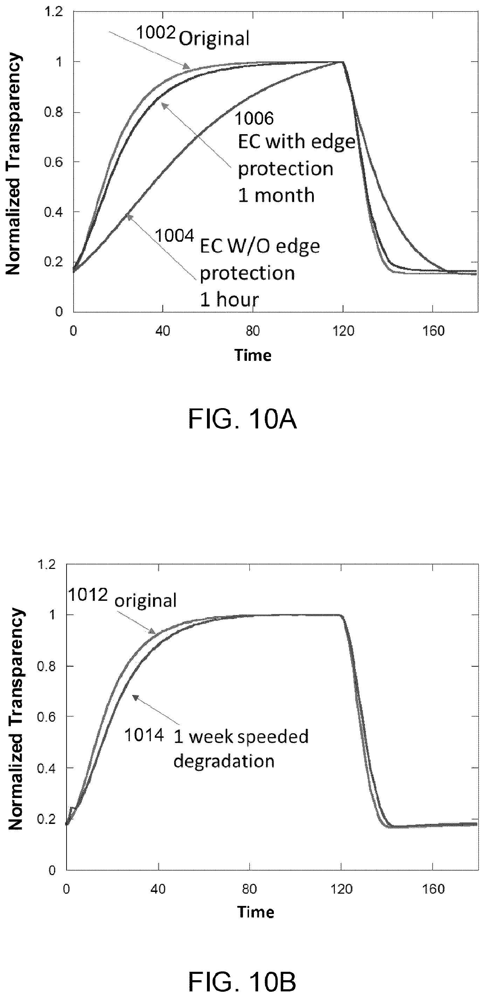

FIG. **10A** illustrates performance and lifetime comparison of a laminated electrochromic film with edge protection according to an embodiment and one without edge protection. The curve **1002** is the original performance of a laminated electrochromic film, i.e., performance without degradation. It shows a behavior of normalized transparency as a function of time for a laminated electrochromic film with no degradation. The curve **1004** shows a behavior of normalized transparency as a function of time of a laminated electrochromic film without edge protection. The curve **1006** shows a behavior of normalized transparency as a function of time of a laminated electrochromic film with edge protection. With comparison among curves **1002, 1004** and **1006** in FIG, **10A****,** one can find that the device without edge protection (curve **1004**) shows very poor stability. After 1h speeded degradation at 100 °C, the device already slows down in switch response. In contrast, the device with edge protection (curve **1006**) only shows limited sign of degradation after 1 month of speeded degradation stress test. Therefore, with an edge protection, a laminated electrochromic film device can be better protected from degradation.

FIG. **10B** illustrates performance and lifetime comparison of an unlaminated electrochromic film with edge protection according to an embodiment and one without edge protection. The curve **1012** is the original performance of an unlaminated electrochromic film, i.e., performance without degradation. It shows a behavior of normalized transparency as a function of time for an unlaminated electrochromic film with no degradation. The curve **1014** shows a behavior of normalized transparency as a function of time of an unlaminated electrochromic film with edge protection. As shown in FIG. **10B****,** after 1 week of speeded degradation stress, the device with edge protection (curve **1014**) still holds a reasonable good switch speed, i.e., similar to the original curve **1012.** Therefore, with an edge protection, an unlaminated electrochromic film can be protected from degradation, leaving a long process window for further lamination process.

This specification describes protecting edges of an electrochromic film that is usually fabricated by a roll-to-roll process with low cost. Since the electrochromic films need to be laminated between substrates (e.g., two glass panels) in their actual application, such as smart windows, without using the methods described above, the selection of lamination interlayer materials would be limited and the storage and transportation would require much more dedicated environment and conditions. The embodiments described above are useful in facilitating the application of electrochromic films in the window industry.

The invention described and claimed herein is not to be limited in scope by the specific preferred embodiments disclosed herein, as these embodiments are intended as illustrations of several aspects of the invention. Indeed, various modifications of the invention in addition to those shown and described herein will become apparent to those skilled in the art from the foregoing description. Such modifications are also intended to fall within the scope of the appended claims.

## Claims

1. A laminated electrochromic device (700) comprising:
a first substrate (702);
a second substrate (704);
a first interlayer (703a) and a second interlayer (703b), wherein each of the first and the second interlayer is positioned in between the first and second substrates;
an electrochromic film (701) disposed between the first and the second interlayers; and
edge protection material (705, 715) extending between the first substrate and the second substrate and around the first interlayer, the second interlayer, and the electrochromic film,
wherein the electrochromic film extends laterally into the edge protection material, and the edge protection material covers and protects the edges of the electrochromic film that extend into the edge protection material.

2. The device of claim 1, wherein the first interlayer is arranged on the first substrate, and wherein the second interlayer is arranged on the second substrate.

3. The device of any one of the preceding claims, wherein the edge protection material is resistant to chemicals of the first and the second interlayers.

4. The device of any one of the preceding claims, wherein the edge protection material includes polyvinyl siloxane, PVS, thermoplastic polyurethane, TPU, or ethylene-vinyl acetate, EVA.

5. The device of any one of the preceding claims, wherein the electrochromic film comprises:
a first electrode (206);
a second electrode (210);
electrochromic material (214) deposited on at least the first electrode;
a charge storage layer (218) deposited on the second electrode; and
a solid polymer electrolyte (222) disposed between the electrochromic material and the charge storage layer.

6. The device of claim 5, wherein the solid polymer electrolyte comprises an electrolyte salt and a polymer matrix.

7. The device of any one of the preceding claims, wherein the first and second electrodes each include an electrode layer including tin doped indium oxide, ITO.

8. The device of claim 1, wherein the first interlayer and the second interlayer are made from polyvinyl butyral, PVB.

9. The device of any one of the preceding claims, wherein the first substrate and the second substrate are glass panels.

## Patentansprüche

1. Laminierte elektrochrome Vorrichtung (700), umfassend:
ein erstes Substrat (702);
ein zweites Substrat (704);
eine erste Zwischenschicht (703a) und eine zweite Zwischenschicht (703b), wobei sich sowohl die erste als auch die zweite Zwischenschicht jeweils zwischen dem ersten und dem zweiten Substrat befinden;
eine elektrochrome Folie (701), die zwischen der ersten und der zweiten Zwischenschicht angeordnet ist; und
Kantenschutzmaterial (705, 715), das sich zwischen dem ersten Substrat und dem zweiten Substrat und um die erste Zwischenschicht, die zweite Zwischenschicht und die elektrochrome Folie erstreckt,
wobei sich die elektrochrome Folie seitlich in das Kantenschutzmaterial erstreckt und das Kantenschutzmaterial die Kanten der elektrochromen Folie abdeckt und schützt, die sich in das Kantenschutzmaterial erstrecken.

2. Vorrichtung nach Anspruch 1, wobei die erste Zwischenschicht auf dem ersten Substrat angeordnet ist und wobei die zweite Zwischenschicht auf dem zweiten Substrat angeordnet ist.

3. Vorrichtung nach einem der vorstehenden Ansprüche, wobei das Kantenschutzmaterial gegenüber Chemikalien der ersten und der zweiten Zwischenschicht beständig ist.

4. Vorrichtung nach einem der vorstehenden Ansprüche, wobei das Kantenschutzmaterial Polyvinylsiloxan, PVS, thermoplastisches Polyurethan, TPU, oder Ethylenvinylacetat, EVA, einschließt.

5. Elektrochrome Vorrichtung nach einem der vorstehenden Ansprüche, wobei die elektrochrome Folie Folgendes umfasst:
eine erste Elektrode (206);
eine zweite Elektrode (210);
elektrochromes Material (214), das auf mindestens der ersten Elektrode abgeschieden ist;
eine Ladungsspeicherschicht (218), die auf der zweiten Elektrode abgeschieden ist; und
einen festen Polymerelektrolyten (222), der zwischen dem elektrochromen Material und der Ladungsspeicherschicht angeordnet ist.

6. Vorrichtung nach Anspruch 5, wobei der feste Polymerelektrolyt ein Elektrolytsalz und eine Polymermatrix umfasst.

7. Vorrichtung nach einem der vorstehenden Ansprüche, wobei die erste und die zweite Elektrode jeweils eine Elektrodenschicht einschließen, die zinndotiertes Indiumoxid, ITO, einschließt.

8. Vorrichtung nach Anspruch 1, wobei die erste Zwischenschicht und die zweite Zwischenschicht aus Polyvinylbutyral, PVB, hergestellt sind.

9. Vorrichtung nach einem der vorstehenden Ansprüche, wobei das erste Substrat und das zweite Substrat Glasscheiben sind.

## Revendications

1. Dispositif électrochrome stratifié (700), comprenant :
un premier substrat (702) ;
un second substrat (704) ;
une première couche intermédiaire (703a) et une seconde couche intermédiaire (703b), dans lequel chacune des première et seconde couches intermédiaires est positionnée entre les premier et second substrats ;
un film électrochrome (701) disposé entre la première et la seconde couche intermédiaire ; et
du matériau de protection des bords (705, 715) s'étendant entre le premier substrat et le second substrat et autour de la première couche intermédiaire, de la seconde couche intermédiaire et du film électrochrome,
dans lequel le film électrochrome s'étend latéralement dans le matériau de protection des bords, et le matériau de protection des bords recouvre et protège les bords du film électrochrome qui s'étendent dans le matériau de protection des bords.

2. Dispositif selon la revendication 1, dans lequel la première couche intermédiaire est agencée sur le premier substrat, et dans lequel la seconde couche intermédiaire est agencée sur le second substrat.

3. Dispositif selon l'une quelconque des revendications précédentes, dans lequel le matériau de protection des bords est résistant aux produits chimiques des première et seconde couches intermédiaires.

4. Dispositif selon l'une quelconque des revendications précédentes, dans lequel le matériau de protection des bords inclut du polyvinylsiloxane, PVS, du polyuréthane thermoplastique, TPU, ou de l'éthylène-acétate de vinyle, EVA.

5. Dispositif selon l'une quelconque des revendications précédentes, dans lequel le film électrochrome comprend :
une première électrode (206) ;
une seconde électrode (210) ;
du matériau électrochrome (214) déposé sur au moins la première électrode ;
une couche de stockage de charge (218) déposée sur la seconde électrode ; et
un électrolyte polymère solide (222) disposé entre le matériau électrochrome et la couche de stockage de charge.

6. Dispositif selon la revendication 5, dans lequel l'électrolyte polymère solide comprend un sel électrolytique et une matrice polymère.

7. Dispositif selon l'une quelconque des revendications précédentes, dans lequel les première et seconde électrodes incluent chacune une couche d'électrode incluant de l'oxyde d'indium dopé à l'étain, ITO.

8. Dispositif selon la revendication 1, dans lequel la première couche intermédiaire et la seconde couche intermédiaire sont fabriquées à partir de polyvinyl butyral, PVB.

9. Dispositif selon l'une quelconque des revendications précédentes, dans lequel le premier substrat et le second substrat sont des panneaux de verre.
